# EUROPEAN PATENT APPLICATION

(11) **EP 4 131 870 A1**
(43) Date of publication of application: **08.02.2023**
(21) Application number: 21780960.7
(22) Date of filing: 23.03.2021
(51) Int. Cl.: H04L 12/741, H04L 29/06

(54) **SERVICE PROCESSING METHOD AND APPARATUS, AND DEVICE AND STORAGE MEDIUM**

(30) Priority: 30.03.2020 CN 202010239569
(71) Applicant: ZTE Corporation, Shenzhen, Guangdong 518057 (CN)
(72) Inventor: ZHAN, Shuangping, Shenzhen, Guangdong 518057 (CN); WEN, Jianzhong, Shenzhen, Guangdong 518057 (CN); LIU, Aihua, Shenzhen, Guangdong 518057 (CN); CHEN, Ran, Shenzhen, Guangdong 518057 (CN)
(74) Representative: Aipex B.V.
(86) International application number: PCT/CN2021/082399
(87) International publication number: WO 2021/197141

(57) **Abstract**

Provided are a service processing method and apparatus, a device, and a storage medium. The service processing method includes determining the transmission path of a service packet from a source node to a target node according to a service request, compressing the network identifier of each of a plurality of nodes on the transmission path to obtain the compression identifier of each node, and transmitting the service packet on the transmission path according to the compression identifier of each node.

## Description

### TECHNICAL FIELD

The present application relates to the field of communication technology and, for example, to a service processing method and apparatus, a device, and a storage medium.

### BACKGROUND

Segment Routing (SR) is an extended source routing technology that defines two standard SR mechanisms: SR-MPLS based on a Multi-Protocol Label Switching (MPLS) forwarding plane and SR-IPv6 (SRv6) based on an Internet Protocol version 6 (IPv6) forwarding plane. The SRv6 mechanism is to define a new extended Segment Routing Header (SRH) in an IPv6 extended routing header. The SRH consists of a series of segment identifiers (SIDs) configured to identify the network node through which a packet is transmitted or the combination of the network node through which the packet is transmitted and the transmission link through which the packet is transmitted. The SID corresponding to the same transmission path is stored in one segment routing table. An SRH may carry multiple segment routing tables.

In an SRv6 network, an SRH typically needs to carry more than 10 segment routing tables. Each segment routing table includes multiple SIDs. However, the length of an SID is mainly 128 bits, and the length of the segment routing tables of the SRH alone exceeds 160 bytes. When a packet is encapsulated, a large encapsulation overhead is generated. In addition, since the SID is long, the length of the packet is too long. For this reason, hardware needs to loop back and read the packet, which cannot be completed in one period. As a result, the throughput is reduced, and the forwarding efficiency and processing efficiency of a service packet are affected.

### SUMMARY

The present application provides a service processing method and apparatus, a device, and a storage medium, so that the encapsulation overhead is reduced, and the requirement on hardware is reduced at the same time.

A service processing method is provided. The method is applied by an SRv6 network and includes determining the transmission path of a service packet from a source node to a target node according to a service request, compressing the network identifier of each of a plurality of nodes on the transmission path to obtain the compression identifier of each node, and transmitting the service packet on the transmission path according to the compression identifier of each node.

An apparatus processing method is also provided. The apparatus is applied by the SRv6 network and includes a path determination module, a compression module, and a transmission module.

The path determination module is configured to determine the transmission path of the service packet from the source node to the target node according to the service request. The compression module is configured to compress the network identifier of each of the plurality of nodes on the transmission path to obtain the compression identifier of each node. The transmission module is configured to transmit the service packet on the transmission path according to the compression identifier of each node.

A device is also provided. The device includes one or more processors and a memory configured to store one or more programs.

When executing the one or more programs, the one or more processors perform the preceding service processing method.

A storage medium is also provided. The storage medium stores a computer program. When executing the computer program, a processor performs the preceding service processing method.

### BRIEF DESCRIPTION OF DRAWINGS

FIG. 1 is a flowchart of a service processing method according to an embodiment of the present application.
FIG. 2 is a flowchart of another service processing method according to an embodiment of the present application.
FIG. 3 is a diagram illustrating the structure of a normal SID according to an embodiment of the present application.
FIG. 4 is a diagram of a transmission path according to an embodiment of the present application.
FIG. 5 is a diagram of an encapsulation format corresponding to the transmission path shown in FIG. 4.
FIG. 6 is a diagram of another transmission path according to an embodiment of the present application.
FIG. 7 is a diagram of an encapsulation format corresponding to the transmission path shown in FIG. 6.
FIG. 8 is a diagram illustrating the structure of a service processing apparatus according to an embodiment of the present application.
FIG. 9 is a diagram illustrating the structure of a device according to an embodiment of the present application.

### DETAILED DESCRIPTION

The present application is described hereinafter in conjunction with drawings and embodiments.

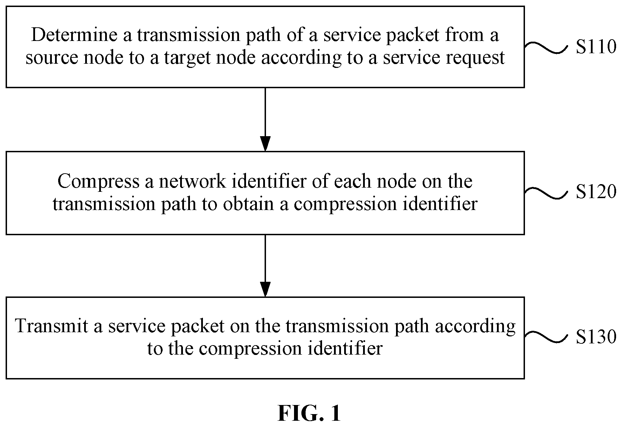

FIG. 1 is a flowchart of a service processing method according to an embodiment of the present application. This embodiment may be applicable to the case where a service is processed. The network identifiers of multiple nodes on a transmission path are compressed to reduce the encapsulation overhead generated in a service packet transmission process. The method is applied by an SRv6 network. This method may be executed by a service processing apparatus. This apparatus may be performed by software and/or hardware and is generally integrated in a device such as a computer and a tablet computer. Referring to FIG. 1, this method includes the steps below.

In S 110, the transmission path of a service packet from a source node to a target node is determined according to a service request.

The service request may be considered as the transmission request of a service. Service transmission is generally transmitted in the form of the service packet. The transmission request may only execute the forwarding of the service packet or may also perform a specified operation on the service packet during the forwarding of the service packet, such as modifying the service packet or counting the service packet. Optionally, the service request may include information such as the source node of the service, the target node of the service, and the intermediate node through which the service is transmitted. The source node, the target node, and the intermediate node may be considered as network devices in the SRv6 network. The source node is a network device that initially sends the service. The target node is a network device that finally receives the service. The intermediate node is a network device through which the service is transmitted from the source node to the target node. In practical applications, the intermediate node may or may not exist.

The transmission path is a transmission line generated based on the source node, the intermediate node, and the target node. For example, A-B-E-D denotes that the service packet is forwarded from source node A to target node D through intermediate node B and intermediate node E. For another example, when the service packet is transmitted to intermediate node E, a count operation is performed on the service packet. The transmission path may be expressed as A-B-(E-100)-D. 100 is an operation identifier corresponding to the count operation. Different operations correspond to unique operation identifiers.

When there are multiple links between two nodes in the transmission path, the transmission path may also carry a corresponding link. For example, in the preceding transmission path, there are two links between B and E. That is, node B may transmit the service packet to node E through port 1 or may also transmit the service packet to node E through port 2. When a transmission link is specified, for example, when the service packet is transmitted through port 2, the transmission path may carry a corresponding link number, for example, A-(B:2)-E-D.

In S 120, the network identifier of each node on the transmission path is compressed to obtain a compression identifier.

The network identifier is configured to uniquely identify a network node or a combination of a network node and a transmission link. When the transmission link between multiple network nodes in the transmission path is fixed and unique, only the network nodes may be identified. When the transmission link between two network nodes is not unique, and the transmission link is specified, the network nodes and the transmission link may be combined. Optionally, the network identifier may be represented as an SID. The number of SIDs is the same as the number of network nodes included in the transmission path.

In the SRv6 network, the transmission path of the service packet is generally stored in a packet header in the form of a table. In practical applications, the packet header generally carries multiple tables. Each table includes multiple SIDs. The length of an SID is mainly 128 bits. As a result, the length of the packet header is long, and a large encapsulation overhead is generated when the packet header and a packet body are encapsulated to obtain the service packet. In addition, since the packet header is long, the service packet is long. As a result, the hardware in the network usually cannot read the service packet in one period and can only loop back and read, thereby reducing the throughput. For this reason, in this embodiment, the SID corresponding to each node on the transmission path is compressed to obtain a compression SID. The length of the compression SID is less than the length of a normal SID, so that the length of the packet header is reduced, and the encapsulation overhead is reduced when the packet header and the packet body are encapsulated to obtain the service packet. At the same time, the length of the service packet is reduced, so that the hardware of the network can read the service packet in one period, thereby reducing the requirement on the hardware. The normal SID is an SID with a length of 128 bits.

There may be a number of methods for compressing the normal SID. For example, for a transmission path, when the normal SIDs of multiple nodes in the transmission path have common prefixes, a part of a normal SID other than the common prefix may be used as a compression SID corresponding to each node. The common prefix is added to the compression SID to obtain a normal SID. For another example, when the normal SIDs of multiple nodes in the transmission path lack the same prefix, a compression function or a mapping function may be used to obtain the compression SID. The embodiment does not limit the type of the compression function and the type of the mapping function. For example, the compression function may use Hash, and the mapping function may use Mapping. Multiple normal SIDs in the same transmission path use the same compression method. During encapsulation, the compression SID only needs to be stored in a corresponding table and then put in the packet header. The normal SID may also be compressed in another method. This is not limited in this embodiment.

To distinguish between the normal SID and the compression SID, a flag bit may be defined in the packet header. The positions that may be used for flagging include the flags, tag, and optional type-length-value (TLV) of the packet header. The method for defining a flag may be customized. For example, the method in which an SID format type is used for indication is used. The format type includes normal 128 bits and compression format n, where n denotes the number of compression methods. For example, there are two compression methods, and the two compression methods are recorded as compression format 1 and compression format 2 respectively.

In S 130, the service packet is transmitted on the transmission path according to the compression identifier.

When the service packet is transmitted, the table of the packet header carries path information. The path information includes the address information and compression SID information of the passed network node. The compression SID information includes the length and compression format of the compression SID. The service packet is forwarded according to the path information carried in the packet header. If other operations need to be performed on the service packet during the transmission of the service packet, for example, when the service packet is transmitted to node D, the Layer 3 Virtual Private Networks (L3VPN) service whose example number is 88 is terminated, and the operation identifier corresponding to node D and the L3VPN service whose example number is 88 may also be stored in the table of the packet header. When the service packet reaches node D, the packet header is parsed to terminate the L3VPN service whose example number is 88. The operation performed on the service packet at a specified node may be a conventional L2VPN/L3VPN operation or may also be an operation customized by programming.

This embodiment of the present application provides a service processing method. The transmission path of the service packet from the source node to the target node is determined according to the service request. The network identifier of each node on the transmission path is compressed to obtain the compression identifier. The service packet is transmitted on the transmission path according to the compression identifier. Compared with the related art, in the preceding method, the network identifier of each node on the transmission path is compressed to reduce the length of the network identifier, so that the encapsulation overhead is reduced in the process of transmitting the service packet based on the compression identifier, and the length of the network identifier is reduced. In this manner, the length of the service packet is also reduced, and the requirement on the hardware is reduced when the hardware is used to read the service packet, thereby improving the forwarding efficiency and processing efficiency of the service packet.

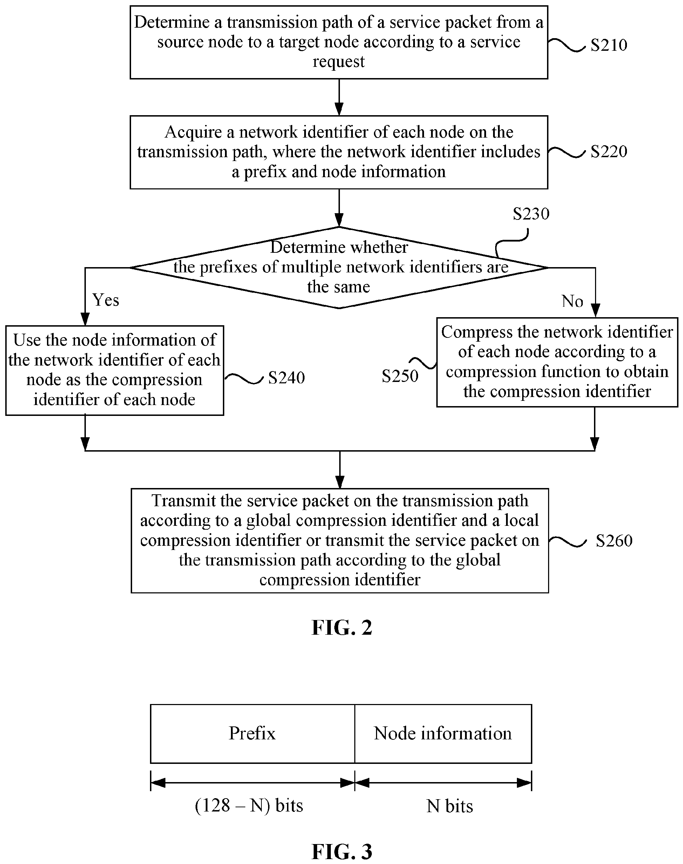

FIG. 2 is a flowchart of another service processing method according to an embodiment of the present application.

In S210, the transmission path of the service packet from the source node to the target node is determined according to the service request.

In S220, the network identifier of each node on the transmission path is acquired. The network identifier includes a prefix and node information.

In this embodiment, a normal SID is divided into a prefix and node information. A network node or a network node and a transmission link are uniquely identified by the prefix and node information. The node information indicates a part of the normal SID other than the prefix. Referring to FIG. 3, FIG. 3 is a diagram illustrating the structure of a normal SID according to an embodiment of the present application. N denotes the length of the node information. The representation form of the normal SID may be 10::A:0/128. 10:: denotes the prefix. :: denotes that multiple zeros are omitted. A:0 denotes the node information. A denotes the node. 128 denotes the length of the normal SID.

In S230, it is determined whether the prefixes of multiple network identifiers are the same. If the prefixes of the multiple network identifiers are the same, S240 is executed. If the prefixes of the multiple network identifiers are different, S250 is executed.

Optionally, in this embodiment of the present application, a normal SID is compressed based on whether the normal SIDs of multiple nodes have common prefixes to obtain a compression SID. When the normal SIDs of the multiple nodes have the common prefixes, the node information part is directly used as the compression SID corresponding to the normal SID, and the compression method is recorded as compression format 1. When the normal SIDs of the multiple nodes do not have the same prefix, in this embodiment, description is given by using an example in which the compression SID is obtained through a compression function, and the compression method is recorded as compression format 2. Optionally, the network identifiers of all the network nodes included in the SRv6 network may be compressed in advance, and the normal SID and the compression SID may be stored in association and subsequently directly applied by looking up a table or compressed according to a selected compression format during application according to a service transmission requirement.

The compression of the normal SID may reduce the length of the service packet and improve the forwarding efficiency. However, when an intermediate operation is involved, for example, when a specified function operation is performed on the service packet at a node, since the compression SID cannot reflect all information of the normal SID, the execution of the operation may be affected. For this reason, in this embodiment, the compression SID is divided into a global compression SID and a local compression SID. The global compression SID may represent a topology-related function such as End or End.X and may be applied to the simple transmission of the service packet, that is, the service packet only needs to be forwarded, and no other operation needs to be performed on the service packet. The global compression SID may globally locate each node in the transmission path and may be used alone, that is, multiple nodes in the transmission path may adopt the global compression SID. The local compression SID is configured to represent a complex local function, such as a function related to an L3VPN example or a service chain. For example, when a node adopts the local compression SID, it indicates that the node may execute the operation of the function related to an L3VPN example or a service chain on the service packet. The local compression SID cannot globally locate each node in the transmission path and generally needs to be used with the global compression SID, and the local compression SID follows only the global compression SID.

In the case where only the simple transmission of service packet is involved, only the global compression SID may be used. In the case where it is necessary to execute a specific function operation at a node, for example, an operation of the related function of a service such as L3VPN/EVPN is executed at a node, so that a node that executes only a transmission function may use the global compression SID, and a node that performs a specific operation uses the local compression SID. Through the combination of the global compression SID and the local compression SID, the efficient transmission of the service packet is ensured without affecting the execution of a specified operation. Each of the preceding compression format 1 and compression format 2 may include the global compression SID and the local compression SID. To distinguish between the global compression SID and the local compression SID, the highest bit of the compression SID may be used as the flag of the global compression SID or the local compression SID. For example, the highest bit of 0 denotes the global compression SID, and the highest bit of 1 denotes the local compression SID.

For compression format 1, the global compression SID is unique in the SRv6 network and has a uniform coding format. The global compression SID includes two parts: a locator and a function. The locator is configured to locate the network node corresponding to the global compression SID in the SRv6 network. The function is configured to indicate the specific function provided by the global compression SID in the SRv6 network. The function includes a network topology-related function and a service-related function. In the SRv6 network, the locators corresponding to multiple nodes are different. For this reason, locator + function is globally unique. The length of the locator and the length of the function may be customized. The local compression SID only needs to be unique locally and does not need a uniform coding format.

For compression format 2, the global compression SID is also unique in the SRv6 network. The coding formats of the global compression SIDs corresponding to the multiple nodes may be the same or different. Each node needs to store a mapping table of the global compression SIDs and the normal SIDs of the multiple nodes. The mapping table is used to store the mapping relationship between a global compression SID and a normal SID. The local compression SID only needs to be unique locally and does not need the uniform coding format. The node corresponding to the local compression SID only needs to store the mapping table of the local compression SID and the normal SID of this node and does not need to store the mapping tables of the local compression SIDs and the normal SIDs of other nodes.

In S240, the node information of the network identifier of each node is used as the compression identifier of each node.

In S250, the network identifier of each node is compressed according to a compression function to obtain the compression identifier.

In S260, the service packet is transmitted on the transmission path according to the global compression identifier and the local compression identifier, or the service packet is transmitted on the transmission path according to the global compression identifier.

The transmission of the service packet on the transmission path includes forwarding the service packet on the transmission path or executing a programmable operation on the service packet in the process of forwarding the service packet on the transmission path. For the scenarios of the global compression SID and local compression SID, reference may be made to the previous embodiment, and the details are not repeated here.

When a specified operation other than the forwarding of the service packet needs to be executed at a node, for example, an operation related to a service such as L3VPN/EVPN, since the operation related to the service such as L3 VPN/EVPN supports a large number of examples, when the length of the function part of the global compression SID is insufficient, it is easy to cause the operation not to be performed normally. For this reason, in this embodiment, when the length of the function part of the global compression SID is insufficient, the combination of the global compression SID and local compression SID is used to ensure the smooth execution of the operation. For example, a termination operation is executed on the L3VPN service whose example number is 88 at node D, and the length of the function part of the global compression SID is 12 bits, so the combination of the global compression SID and local compression SID needs to be used. For example, node D adopts the local compression SID, and other nodes adopt the global compression SID. In the embodiment, the process of executing a specified operation on the service packet at a node refers to the programmable operation.

Embodiment two of the present application provides a service processing method. In the SRv6 network, a normal SID may be compressed in different compression formats to obtain a compression SID. In this manner, the encapsulation overhead is reduced, and the service forwarding efficiency is improved. On this basis, in order not to affect the execution of an operation on the service packet at a specified node, the compression SID is divided into a global compression SID and a local compression SID. Through the combination of the global compression SID and the local compression SID, when the service packet is transmitted, the service packet may be processed flexibly.

The following describes how the global compression SID and the local compression SID can implement the transmission of the service packet in different compression formats through several examples. The transmission includes simple transmission or an operation executed at a node during transmission.

### Example one

The service packet is transmitted based on the compression SID of compression format 1 in the SRv6 network.

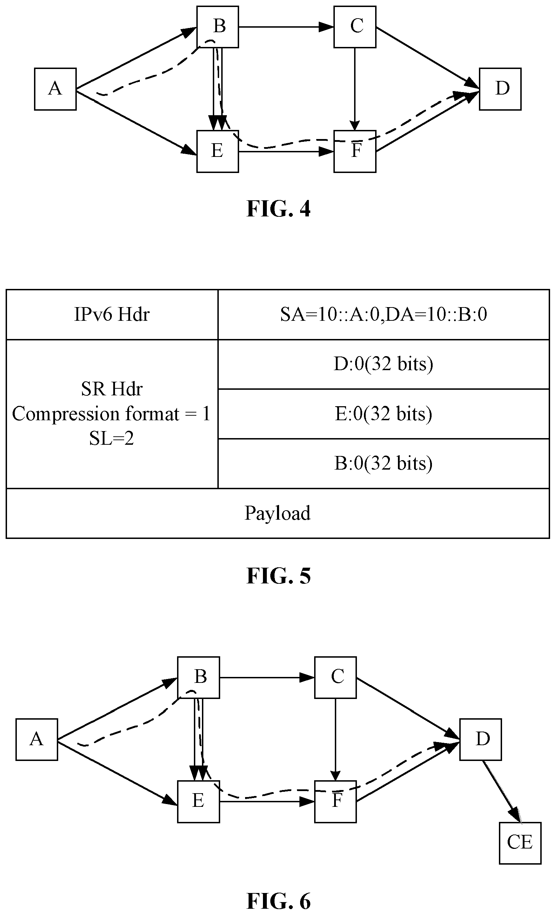

Optionally, each node adopts the global compression SID. The length of the global compression SID is 32 bits. Referring to FIG. 4, FIG. 4 is a diagram of a transmission path according to an embodiment of the present application. A, B, C, D, E, and F are network nodes in the SRv6 network. A solid line denotes a transmission link between network nodes. If one solid line exists between two network nodes, it indicates that there is only one transmission link between the two network nodes. For example, there is only one transmission link between each of A and B, B and C, C and D, A and E, E and F, and F and D. If multiple solid lines exist between two network nodes, it indicates that there are multiple transmission links between the two network nodes. For example, there are two transmission links between B and E. A transmission link may be specified when the service packet is transmitted. A dashed line denotes the transmission path of the service packet from the source node to the target node. In FIG. 4, the source node is A, and the target node is D. During transmission, some or all of the intermediate nodes through which the service packet is transmitted may be constrained. FIG. 4 uses an example in which intermediate node B and intermediate node E are constrained, that is, some of the nodes through which the service packet is transmitted are specified. According to the association relationship between multiple network nodes in FIG. 4, when the service is transmitted to intermediate node E, it may be automatically determined that the next hop is to be transmitted to intermediate node F, and the service is then forwarded to target node D by intermediate node F.

Assuming that the common prefix of the normal SIDs of multiple nodes in the transmission path is 96 bits, the length of the compression SID is 32 bits. The highest position of the compression SID is set to 0, which denotes the global compression SID. The global compression SID corresponding to this compression format has a uniform coding method and consists of a locator and a function. For example, the length of the locator part is 19 bits, and the length of the function part is 12 bits. The locators of multiple network nodes are different. In this example, the locator part denotes each node with A, B, C, D, E, and F respectively. When it is necessary to execute an operation on the service packet at a node, the operation may be denoted by a corresponding operation identifier in the function part. If the function part is 0, it indicates that the network node executes only a forwarding operation on the service packet.

Each network node in the SRv6 network announces, to the outside, a local SID table and routing information to the node. The routing information of the node is the common prefix plus the locator of the global compression SID. The length of the routing information is 96 bits + 20 bits = 116 bits. Other network nodes may determine the next hop of the path to this node according to the transmission path, mount this routing information into a routing table, and announce this routing information to the outside. For example, the routing information announced by network node A is 10::A:0/116, and network node B calculates the next hop of the path to network node A according to the transmission path, mounts this routing information into a routing table, and announces this routing information to the outside. The processes of other network nodes are similar. The local SID table is used to store the operation executed on the service packet at the node. For example, node A is 10::A:0/128. According to the preceding description, the function part is 0, it indicates that node A only forwards the service packet, that is, after the service packet reaches node A, node A executes an End operation and then proceeds to the next hop. Similarly, the local SID table of node B includes 10::B:0/128; the local SID table of node C includes 10::C:0/128; the local SID table of node D includes 10::D:0/128; the local SID table of node E includes 10::E:0/128; and the local SID table of node F includes 10::F:0/128.

Before transmission, a processor sends transmission path information to the source node. For example, in FIG. 4, the processor sends the transmission path information to source node A. The transmission path information includes the compression SID information of a constraint node. The constraint node is a specified transmission node. For example, in FIG. 4, constraint nodes are A, B, E, and D. The compression SID information includes a compression format corresponding to the compression SID and a compression type corresponding to the compression SID, such as global compression or local compression. After a service flow enters node A, the acquired path information is encapsulated.

Reference is made to FIG. 5 for the encapsulation format. FIG. 5 is a diagram of an encapsulation format corresponding to the transmission path shown in FIG. 4. Compression format = 1 denotes that multiple nodes in the transmission path use compression format 1 to compress normal SIDs. SA denotes the source node, for example, node A (10::A:0) in FIG. 4. DA denotes the node corresponding to the next hop of the source node in the transmission path. Referring to FIG. 4, when SA is node A (10::A:0), DA is node B (10::B:0). 32 bits denotes the length of the compression SID. SL denotes a pointer. The types of the SID are different, and SL minus 1 denotes different meanings. For example, for the normal SID, SL minus 1 denotes moving of the length of 128 bits. For the compression SID, for example, the length of the compression SID is 32 bits, and SL minus 1 denotes moving of the length of 32 bits. A 128-bit pointer moving mechanism compatible with the normal SID may be used, that is, the pointer operation of the normal SID is still performed in units of 128 bits, but the compression SID operation inside the 128-bit pointer is added. For example, the compression SID is set to a null SID after the currently processed compression SID is extracted from the 128-bit pointer. If all the compression SIDs inside the 128-bit pointer are null SIDs, the 128-bit pointer is subtracted by 1. The embodiment uses the former as an example. The number of SLs may be determined according to the number of nodes included in the transmission path. For example, the transmission path includes four nodes A, B, E, and D, so the number of SLs is 3. When the service packet is at node A, SL = 2. When the service packet is at node B, SL = 1. When the service packet is at node E, SL = 0.

When the service packet reaches node B, node B queries the local SID table according to the received DA to obtain 10::B:0/128, executes the End operation, and then decrements the SL by 1, and at this time, SL = 1. The compression SID indicated by the updated pointer is extracted, that is, E:0, and at this time, DA is 10::E:0. A routing table is queried to obtain 10::E:0/116. A normal forwarding process is executed to forward the service packet from a corresponding interface to node E. In FIG. 4, there are two equivalent transmission links between node B and node E. Transmission may be performed in the two transmission links. After the service packet reaches node E, node E queries the local SID table according to the received DA to obtain 10::E:0/128, executes the End operation, and decrements the SL by 1, and at this time, SL = 0. The SID indicated by the updated pointer is extracted, that is, D:0, and at this time, DA is 10::D:0. The routing table is queried to obtain 10::D:0/116. The normal forwarding process is executed. According to the information of the constraint node shown in FIG. 5, the service packet needs to be forwarded from node E to node D through the corresponding interface. However, according to the transmission path shown in FIG. 4, the service packet needs to transmit through node F from node E to node D, and there is only one transmission link between each of node F and node E and node F and node D. For this reason, the normal transmission of the service packet may still be implemented without constraining node F. Similar to the preceding process, a normal forwarding operation is executed on the service packet at point E, and the service packet is forwarded to node F. Node F queries the routing table according to the received DA to obtain 10::F:0/116. The normal forwarding operation is executed to forward the service packet from a corresponding interface to node D. After the service packet reaches node D, node D queries the local SID table according to the received DA to obtain 10::D:0/128 and executes the End operation, and at this time, SL = 0. The service content may be obtained by stripping the packet header and restoring the packet body.

Optionally, all the nodes and the transmission links through which the service packet is transmitted may be constrained. For example, according to FIG. 4, the service packet is still transmitted from node A to node D, and the transmission path may also be A-B(port 2)-E-F-D. When the service packet reaches node B, node B queries the local SID table according to the received DA to obtain 10::B:2/128, executes an End.X operation, and then decrements the SL by 1, and at this time, SL = 2. The compression SID indicated by the updated pointer is extracted, that is, E:0, and at this time, DAis 10: :E:0. The End.X operation does not need to continue looking up the table and may directly send the service packet from the specified port 2, thereby avoiding the problem of path uncertainty caused by equal-cost multi-path routing (ECMP). The process of forwarding the service packet from node E to node F and then from node F to node D is similar to the process of forwarding the service packet from node A to node B, and the details are not repeated here.

### Example two

In the SRv6 network, an operation related to the service such as L3VPN/EVPN is executed on the service packet at a specified node based on the compression SID of compression format 1.

When compression format 1 is used, the function of the global compression SID may be used to represent a topology-related operation such as End or End.X or may be a simple forwarding operation, and for example, the length is still 12 bits. For the operation related to the service such as L3VPN/EVPN which supports a large number of examples, the length of the function in this example is insufficient. For this reason, the combination of the global compression SID and local compression SID needs to be used.

Referring to FIG. 6, FIG. 6 is a diagram of another transmission path according to an embodiment of the present application. The transmission path is A-B-E-D. Different from FIG. 4, in FIG. 6, a termination operation needs to be executed on the L3VPN service whose example number is 88 in the service packet at node D, and CE denotes the part of the service packet whose example number is 88. It is still assumed that the length of the normal prefix part of multiple nodes is 96 bits, and the length of the compression SID is 32 bits. The local SID tables corresponding to node A, node B, node C, node D, node E, and node F include 10::A:0/128, 10::B:0/128, 10::C:0/128, 10::D:0/128, 10::E:0/128, and 10::F:0/128 respectively. In addition, the local SID table of node D also includes 10::FFFF:88/128, which denotes an End.DT4 function and represents the L3VPN whose example number is 88. That is, the termination operation is executed on the L3VPN service whose example number is 88 at node D. The routing information announced to the outside by each node may be referred to example one.

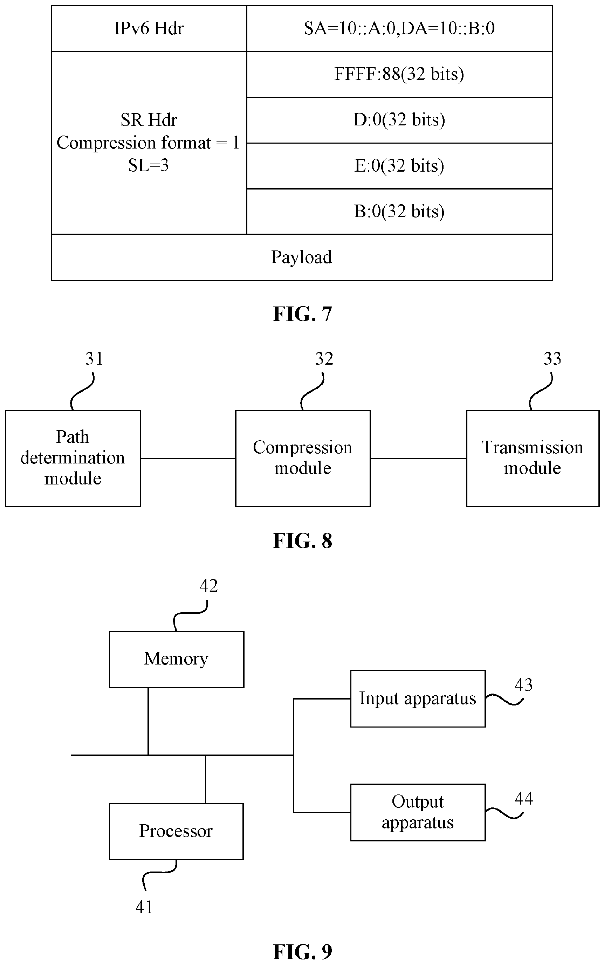

Referring to FIG. 7, FIG. 7 is a diagram of an encapsulation format corresponding to the transmission path shown in FIG. 6. The transmission process of the service packet between nodes A, B, and E may be referred to example one. Since all the nodes through which the service packet is transmitted are not constrained in FIG. 7, after the service packet is transmitted to node E, node E sends the service packet to node F. Node F queries the routing table according to the received DA to obtain 10::D:0/116. The normal forwarding operation is executed to forward the service packet from the corresponding interface to node D. Node D queries the local SID table according to the received DA to obtain 10::D:0/128, executes the End operation, and decrements the SL by 1. The SID indicated by the updated pointer is extracted to obtain FFFF:88, and at this time, DA is 10::FFFF:88. The local SID table is continuously queried to obtain 10::FFFF:88/128. An End.DT4 operation is executed. The packet header and the packet body are stripped. The packet body is sent to VRF88. The routing table is looked up in the VRF88. The packet is sent to a device connected to the VRF88. Node D adopts the local compression SID.

The local compression SID may be placed at the end of an encapsulation table to denote VPN, and the local compression SID may also be placed in other positions. The encapsulation table is the table shown in FIG. 7. For example, on the basis of FIG. 7, a specified operation may be executed at node E. For example, when the service packet reaches node E, the service packet needs to transmit through a firewall of node E. On the basis of example two, the local SID tables of multiple nodes also need to add 10::FFFF:1/128 to the local SID table of node E to denote a firewall (FW) function. The transmission process of the service packet between the multiple nodes is similar to the preceding example, and the details are not repeated here.

### Example three

The service packet is transmitted based on the compression SID of compression format 2 in the SRv6 network.

When the normal SIDs corresponding to the multiple network nodes do not have a common prefix, compression format 2 may be used for compression. It is assumed that the length of the compression SID is 32 bits. In this example, the global compression SID is used to transmit the service packet, and A:0-F:0 is used to represent A-F to denote multiple network nodes. Different from compression format 1, the local SID table of the network node corresponding to compression format 2 includes a normal SID table item, a corresponding global compression SID, and a mapping table reflecting the mapping relationship between the two. For example, the local SID table of node A includes 10:: 1:0/128 which denotes an End function, a corresponding global compression SID A:0, and a mapping table. The local SID tables of other nodes are similar.

In this manner, the prefix of the routing information announced to the outside by each node is the locator part of the normal SID. Assuming that the length of the locator of the normal SID is 64 bits, the routing information announced by node A is 10:: 1:0/64; the routing information announced by node B is 20:: 1:0/64; the routing information announced by node C is 30:: 1:0/64; the routing information announced by node D is 40:: 1:0/64; the routing information announced by node E is 50:: 1:0/64; and the routing information announced by node F is 60::1:0/64. Other details and the transmission process may be referred to the compression format, and the details are not repeated here.

In addition, compression format 2 may also be configured to constrain all the nodes through which the service packet is transmitted and execute the operation in the preceding example on the service packet at the target node or the intermediate node, and the process is similar to compression format 1. The technical solutions of the present application may be applied not only to multiple compression formats, but also to the combination of the global compression SID and the local compression SID when an operation is executed on the service packet at a node, so that the processing efficiency is improved, and the normal processing of the service is ensured at the same time.

FIG. 8 is a diagram illustrating the structure of a service processing apparatus according to an embodiment of the present application. The apparatus can execute the service processing method of the preceding embodiment. Referring to FIG. 8, the apparatus includes a path determination module 31, a compression module 21, and a transmission module 33.

The path determination module 31 is configured to determine the transmission path of the service packet from the source node to the target node according to the service request. The compression module 32 is configured to compress the network identifier of each node on the transmission path to obtain the compression identifier. The transmission module 33 is configured to transmit the service packet on the transmission path according to the compression identifier.

In the service processing apparatus provided by this embodiment of the present application, the transmission path of the service packet from the source node to the target node is determined according to the service request; the network identifier of each node on the transmission path is compressed to obtain the compression identifier; and the service packet is transmitted on the transmission path according to the compression identifier. In this apparatus, the network identifier of each node on the transmission path is compressed to reduce the length of the network identifier, so that the encapsulation overhead is reduced in the process of transmitting the service packet based on the compression identifier, and the length of the network identifier is reduced. In this manner, the length of the service packet is also reduced, and the requirement on the hardware is reduced when the hardware is used to read the service packet.

On the basis of the preceding embodiment, the compression module 32 is configured to acquire the network identifier of each node on the transmission path. The network identifier includes a prefix and node information. If the prefixes of multiple network identifiers are the same, the node information of the network identifier of each node is used as the compression identifier of each node. If the prefixes of the multiple network identifiers are different, the network identifier of each node is compressed according to a compression function to obtain the compression identifier.

On the basis of the preceding embodiment, the compression identifier includes a global compression identifier and a local compression identifier.

On the basis of the preceding embodiment, the transmission module 33 is configured to transmit the service packet on the transmission path according to the global compression identifier and the local compression identifier of each node or transmit the service packet on the transmission path according to the global compression identifier. The transmission of the service packet on the transmission path includes forwarding the service packet on the transmission path or executing the programmable operation on the service packet in the process of forwarding the service packet on the transmission path.

The service processing apparatus provided by this embodiment of the present application may execute the service processing method in the preceding embodiment and has functional modules and beneficial effects corresponding to the method executed.

FIG. 9 is a diagram illustrating the structure of a device according to an embodiment of the present application.

Referring to FIG. 9, the device includes a processor 41, a memory 42, an input apparatus 43, and an output apparatus 44. One or more processors 41 may be disposed in the device, and one processor 41 is used as an example in FIG. 9. The processor 41, the memory 42, the input apparatus 43, and the output apparatus 44 in the device may be connected by a bus or other modes. Connecting by a bus is used as an example in FIG. 9.

As a computer-readable storage medium, the memory 42 may be configured to store software programs, computer-executable programs and modules, such as program instructions/modules corresponding to the service processing method in embodiments of the present application. The processor 41 runs the software programs, instructions and modules stored in the memory 42 to execute various function applications and data processing of the device, that is, the preceding service processing method is implemented.

The memory 42 mainly includes a program storage area and a data storage area. The program storage area may store an operating system and an application program required for implementing at least one function while the data storage area may store data created depending on use of terminals. Additionally, the memory 42 may include a high-speed random-access memory and may also include a non-volatile memory, for example, at least one magnetic disk memory, a flash memory, or another non-volatile solid-state memory. In some examples, the memory 42 may include memories which are remotely disposed relative to the processor 41, and these remote memories may be connected to the device via a network. Examples of the preceding network include, but are not limited to, the Internet, an intranet, a local area network, a mobile communication network, and a combination thereof.

The input apparatus 43 may be configured to receive inputted digital or character information and generate key signal input related to user settings and function control of the device. The output apparatus 44 may include a display device such as a display screen, a speaker, and an audio device such as a buzzer.

The device provided by this embodiment of the present application and the service processing method provided by the preceding embodiments belong to the same concept. For technical details not described in this embodiment, reference may be made to the preceding embodiments. This embodiment has the same effects as the service processing method executed.

An embodiment of the present application provides a storage medium. The storage medium stores a computer program. When executing the computer program, a processor performs the service processing method described in the preceding embodiments of the present application.

In the storage medium including computer-executable instructions provided by this embodiment of the present application, the computer-executable instructions may execute not only the operations in the preceding service processing method but also related operations in the service processing method provided by any embodiment of the present application and have corresponding functions and effects.

From the preceding description of the embodiments, the present application may be implemented by means of both software and required general-purpose hardware, and also by means of hardware. The technical solutions of the present application may be essentially embodied in the form of a software product. The software product in a computer may be stored in a computer-readable storage medium such as a floppy disk, a read-only memory (ROM), a random-access memory (RAM), a flash memory, a hard disk, or an optical disc in the computer and includes multiple instructions for enabling a computer device (which may be a robot, a personal computer, a server, or a network device) to execute the service processing method of the preceding embodiments of the present application.

## Claims

1. A service processing method, applied to a segment routing internet protocol version 6, SRv6, network, comprising:
determining a transmission path of a service packet from a source node to a target node according to a service request;
compressing a network identifier of each node of a plurality of nodes on the transmission path to obtain a compression identifier of the each node; and
transmitting the service packet on the transmission path according to the compression identifier of the each node.

2. The method according to claim 1, wherein compressing the network identifier of the each node of the plurality of nodes on the transmission path to obtain the compression identifier of the each node comprises:
acquiring the network identifier of the each node on the transmission path, wherein the network identifier comprises a prefix and node information;
in a case where the prefixes of a plurality of network identifiers corresponding to the plurality of nodes in a one-to-one correspondence are the same, using the node information of the network identifier of the each node as the compression identifier of the each node; and
in a case where the prefixes of the plurality of network identifiers corresponding to the plurality of nodes in the one-to-one correspondence are different, compressing the network identifier of the each node according to a compression function to obtain the compression identifier of the each node.

3. The method according to claim 1, wherein the compression identifier of the each node comprises a global compression identifier of the each node and a local compression identifier of the each node.

4. The method according to claim 3, wherein transmitting the service packet on the transmission path according to the compression identifier of the each node comprises:
transmitting the service packet on the transmission path according to the global compression identifier of the each node and the local compression identifier of the each node; or transmitting the service packet on the transmission path according to the global compression identifier of the each node,
wherein transmitting the service packet on the transmission path comprises forwarding the service packet on the transmission path, or executing a programmable operation on the service packet in a process of forwarding the service packet on the transmission path.

5. A service processing apparatus, applied to a segment routing internet protocol version 6, SRv6, comprising:
a path determination module configured to determine a transmission path of a service packet from a source node to a target node according to a service request;
a compression module configured to compress a network identifier of each node of a plurality of nodes on the transmission path to obtain the compression identifier of the each node; and
a transmission module configured to transmit the service packet on the transmission path according to the compression identifier of the each node.

6. The apparatus according to claim 5, wherein the compression module is configured to:
acquire the network identifier of the each node on the transmission path, wherein the network identifier comprises a prefix and node information;
in a case where the prefixes of a plurality of network identifiers corresponding to the plurality of nodes in a one-to-one correspondence are the same, use the node information of the network identifier of the each node as the compression identifier of the each node; and
in the case where the prefixes of the plurality of network identifiers corresponding to the plurality of nodes in the one-to-one correspondence are different, compress the network identifier of the each node according to a compression function to obtain the compression identifier of the each node.

7. The apparatus according to claim 5, wherein the compression identifier of the each node comprises a global compression identifier of the each node and a local compression identifier of the each node.

8. The apparatus according to claim 7, wherein the transmission module is configured to:
transmit the service packet on the transmission path according to the global compression identifier of the each node and the local compression identifier of the each node; or
transmit the service packet on the transmission path according to the global compression identifier of the each node,
wherein transmitting the service packet on the transmission path comprises forwarding the service packet on the transmission path or executing a programmable operation on the service packet in a process of forwarding the service packet on the transmission path.

9. A device, comprising:
at least one processor; and
a memory configured to store at least one program,
wherein when executing the at least one program, the at least one processor performs the service processing method according to any one of claims 1 to 4.

10. A storage medium storing a computer program, wherein the computer program, when executed by a processor, implements the service processing method of any one of claims 1 to 4.
